# EUROPÄISCHE PATENTSCHRIFT

(11) **EP 0 881 020 B1**
(45) Veröffentlichungstag und Bekanntmachung des Hinweises auf die Patenterteilung: **14.08.2002**
(21) Anmeldenummer: 97201567.1
(22) Anmeldetag: 28.05.1997
(51) Int. Cl.: B23B 51/00, B23B 5/40, B23C 5/10

(54) **Verfahren und Werkzeug zur Bearbeitung von Nuten mit sphärischer Unterschnittfläche**
Method and tool for working grooves with spherical undercutting
Méthode et outil pour la fabrication de rainures avec chambrage sphérique

(43) Veröffentlichungstag der Anmeldung: 02.12.1998
(73) Patentinhaber: O.M.F.B. S.p.A. -Hydraulic Components, 25050 Provaglio d'Iseo (Brescia) (IT)
(72) Erfinder: Jaeger, Walter, 6951 Cureglia (CH)
(74) Vertreter: Checcacci, Giorgio

(56) Entgegenhaltungen:
- DE-A- 4 406 856
- US-A- 3 212 405
- US-A- 4 092 902
- US-A- 5 626 446
- BARLOW: "Generating Spherical Surfaces on a Milling Machine" METALWORKING PRODUCTION., Bd. 112, Nr. 38, 18.September 1968, LONDON GB, Seiten 45-46, XP002046256

## Beschreibung

Einige Werkstücke, wie zum Beispiel, jedoch nicht ausschließlich, der Schwingtisch für die Kupplung und die Steuerung der Kolben von Kolbenpumpen, müssen Nuten oder Sitze mit sphärischer Unterschnittfläche aufweisen, die einen entsprechenden vollen sphärischen Teil wie zum Beispiel die Kopfstücke der Kolben dieser Pumpen aufnehmen müssen.

Derzeit werden diese Nuten oder Sitze mit sphärischer Unterschnittfläche durch eine Bearbeitung auf Werkzeugmaschinen durch Drehen vor dem abschließenden Schleifen erzielt (siehe z.B. DE-4406856). Diese Bearbeitung, die gewöhnlich angewendet wird, erfordert eine hohe Präzision und trotz der modernen Kontrollvorrichtungen, gewährleistet sie nicht immer die erforderliche Präzision der ausgeführten Nuten oder Sitze.

Weiter ist es bekannt, sphärische Oberflächen durch Fräsen herzustellen (siehe BARLOW: "Generating Spherical Surfaces on a Milling Machine" Metalwosking Production, Bd.112, Nr. 38, 18.09.1968, London, GB, Seiten 45-46).

Zweck der vorliegenden Erfindung ist es hingegen, ein Bearbeitungsverfahren und ein neues Werkzeug vorzuschlagen, die ausgehend von einer Bohrung die Ausführung einer Nut oder eines Sitzes mit sphärischer Unterschnittfläche in einem einzigen Arbeitsschritt auch ohne ein abschließendes Schleifen gestatten, um dabei Abmessungs-, Toleranz- und Rundungswerte zu erzielen, die sehr zufriedenstellend sind. Die Bearbeitung von Nuten und Sitzen mit sphärischer Unterschnittfläche wird so vereinfacht, die Zeit und Kosten der Bearbeitung werden reduziert und das fertige Werkstück weist Eigenschaften auf, die es für seine Bestimmung besser geeignet machen.

Dieses Ziel wird durch ein Verfahren nach Anspruch 1 erzielt. Das Verfahren umfaßt die Benutzung einer sphärischen Fräse mit einem zylindrischen Abschnitt in einer äquatorialen Ebene, wobei die genannte spärische Fräse um eine Rotationsachse dreht, die senkrecht zu ihrer äquatorialen Ebene steht, und wobei sie zur gleichen Zeit auf einer Schwingachse schwingt, deren Zentrum sich im Zentrum der Fräse befindet und senkrecht ist.

Mit anderen Worten dreht sich die sphärische Fräse und gleichzeitig schwingt sie mit einer Bewegung polar zu einer Achse, die der Achse des zylindrischen äquatorialen Abschnitts und somit der polaren Achse der Fräse entspricht und durch das Zentrum derselben verläuft. Das Resultat ist eine Selbsterzeugung eines sphärischen Sitzes durch die Fräse, ausgehend von einer zylindrischen Bohrung, wobei der sphärische Sitz den Abmessungen der Fräse entspricht, und der zylindrische äquatoriale Abschnitt der Fräse für die Ein- und Ausgang der Fräse durch den Eingang des Sitzes vorgesehen ist.

Das erfindungsgemäße Werkzeug ist im Ansprüch 3 definiert. Ein derartiges Werkzeug weist einen zylindrischen äquatorialen Abschnitt auf und wird von einem Werkzeughalter getragen, der in die Rotationsspindel einer NC-Fräsmaschine eingesetzt wird, wobei der Werkzeughalter aus zwei Gelenkelementen besteht, die mit einem Kardangelenk verbunden sind und eine Rotation der Fräse und gleichzeitig - - durch eine radiale Verschiebung der Spindel aus der ausgerichteten Position der beiden Gelenkelemente des Werkzeughalters - eine erzwungene Schwingbewegung mit Zentrum im Zentrum der Fräse gestatten.

Weitere vorteilhafte Details des neuen Werkzeugs werden aus der folgenden Beschreibung hervorgehen, wobei auf die beiliegenden Zeichnungen Bezug genommen wird, wobei:
Abbildung 1 das Werkzeug im Längsschnitt zeigt;
Abbildung 2 eine Außenansicht des Werkzeugs in einer Phase der Bearbeitung zeigt, wo mit den gestrichelten Linien andere Positionen des Werkzeugs während der Bearbeitung dargestellt werden;
Abbildung 3 ein Beispiel einer Nut oder eines Sitzes mit sphärischer Unterschnittfläche zeigt.

Das hier vorgeschlagene Werkzeug enthält eine sphärische Fräse 11 mit einem zylindrischen äquatorialen Abschnitt 11'. Die sphärische Fräse 11 wird auf der Ebene eines ihrer Pole an einem Schaft 12 angebracht, festgebaut mit einer. Muffe 13, die externe Rinne 13' in Längsrichtung aufweist.

Die Muffe 13 wird in eine Buchse 14 mit Außengewinde eingesetzt, die innen Rinne 14' aufweist , die die externe Rinne der Muffe entsprechen und die Muffe kann sich in axialer Richtung bewegen. Die Buchse 14 ist an einen Abschlusskörper 15 angeschraubt, an den durch einen Mitnehmerstift 16' ein erstes Element 16 eines Kardangelenks angeschlossen ist, dessen zweites Element 17 durch einen entsprechenden Mitnehmerstift 17' an einen Schaft 18 angeschlossen ist, der an der Spindel einer Fräsmaschine angebracht werden kann.

Zwischen diesem Abschlusskörper 15 und die Muffe 13 befindet sich eine komprimierte Feder 19, die die Muffe normalerweise axial verschoben nach außen der externen Buchse 14 hält.

Das Austreten der Muffe 13 aus der Buchse 14 wird von einer Nutmutter 20 verhindert, die an dem inneren Ende der Muffe befestigt ist und auf einem Anschlag innerhalb der Buchse aufliegt.

Das erste Elemente 16 des Kardangelenks wird von einer festen Buchse 21 umgeben, die an einer Seite auf dem Abschlusskörper aufliegt und auf der anderen Seite einen Flansch 21' aufweist. Dieser befindet sich auf einer beweglichen Ausrichtbuchse 22, die entlang des Schafts 18 gleiten kann. Eine Ausrichtfeder 23, zwischen einem Flansch 18' festgebaut mit dem Schaft 18 und einem Flansch 21' der mit der beweglichen Buchse 22 aufgestellt ist, hält die bewegliche Buchse gegen den Flansch 21' der festen Buchse konstant gedrückt.

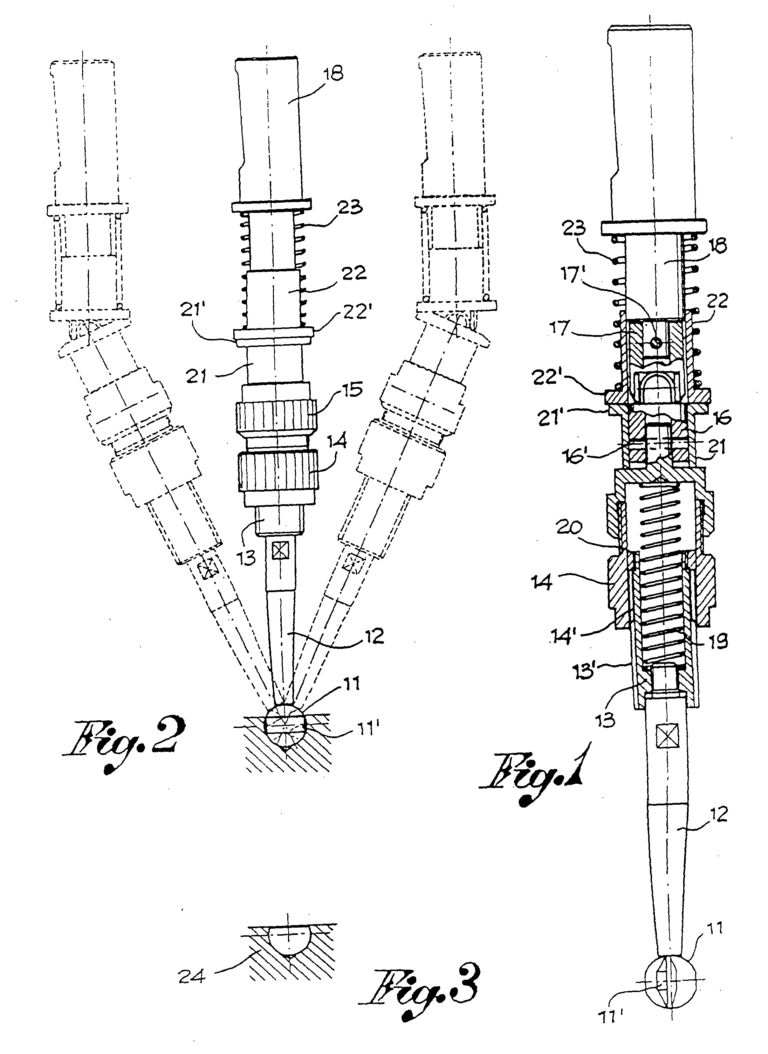

Falls keine externen Kräfte vorhanden sind, hält normalerweise die bewegliche Buchse 22, gedrückt von der entsprechenden Feder 23 und in Wechselwirkung mit der festen Buchse 21, den Schaft 18, das Kardangelenk 16-17, den Abschlusskörper, die Gewindebuchse 14, die Gleitmuffe 13 und die Fräse 11 alle auf der Achse X ausgerichtet, die mit der Rotationsachse der Spindel und der polaren Achse der sphärischen Fräse zusammenfällt. Dies wird auf Abbildung 1 der Zeichnung dargestellt und kann geändert werden, indem die Fräse in einer Position gehalten und indem der Schaft 18 durch eine seitliche Bewegung der Spindel der Fräsmaschine radial verschoben wird, wie durch die gestrichelten Linien auf Abbildung 2 gezeigt, oder umgekehrt, indem das Werkstück gegenüber der Spindel verschoben wird. Dies ist dank des mittleren Kardangelenks 16-17 möglich, und die Ausrichtungs- und Rotationsachse X der Tragelemente der Fräse wird auf der Höhe des Kardangelenks geteilt.

Mit anderen Worten ist die sphärische Fräse an einem Werkzeughalter angebracht, der in der Mitte ein Gelenk aufweist, das die Rotation der sphärischen Fräse und gleichzeitig eine polare Schwingbewegung der Fräse gestattet, wobei das Zentrum auf die Rotationsachse liegt und mit dem Zentrum der Fräse zusammenfällt, also mit der auszuführenden Nut oder mit dem auszuführenden Sitz.

Ausgehend von einer Bohrung im Werkstück 24 kann die sphärische Fräse 11 in die genannte Bohrung eingesetzt und in Rotation und Schwingung versetzt werden, wodurch bei Selbsterzeugung eine sphärische Nut bzw. einer sphärische Sitz erzeugt wird (Abbildung 2). Die Fräse wird dank des zylindrischen Teils 11' am Anfang durch diese Bohrung eingesetzt und am Ende durch sie herausgenommen, wenn die Achse der Spindel und die X-Achse des Werkzeugshalters ausgerichtet sind und zusammenfallen. Durch die Rotation und das Schwingen der Fräse in der oben beschriebenen Weise wird in der Bohrung ein perfekt sphärischer Sitz ausgeführt, dessen Abmessungen denen der Fräse selbst entsprechen.

## Patentansprüche

1. Ein Verfahren zur Bearbeitung einer Nut oder eines Sitzes mit sphärischer Unterschnittfläche, ausgehend von einer Bohrung in einem Werkstück, wobei eine sphärische Fräse (11) mit einem zylindrischen Abschnitt (11') in der äquatorialen Ebene verwendet wird und wobei die genannte sphärische Fräse um eine Rotationsachse rotiert, die senkrecht zu ihrer äquatorialen Ebene steht, und wobei die Rotationsachse gleichzeitig um ein Schwingzentrum schwingt, das mit dem Zentrum der sphärischen Fräse zusammenfällt.

2. Verfahren gemäß Anspruch 1, wobei die Schwingung der Fräse als Zentrum das Zentrum der sphärischen Fräse (11) hat und wobei die äquatoriale Ebene der sphärischen Fräse sich im Innern der Eingangsöffnung der auszuführenden Nut bzw. des auszuführenden Sitzes befindet.

3. Ein Werkzeug zur Bearbeitung einer Nut oder eines Sitzes mit sphärischer Unterschnittfläche in einem zuvor angebohrten Werkstück gemäß einem Bearbeitungsverfahren nach Anspruch 1, **dadurch gekennzeichnet, dass** eine sphärische Fräse (11) einen zylindrischen Abschnitt (11') in einer äquatorialen Ebene aufweist und von einem Werkzeughalter (13,14,15, 18) getragen wird, der an einer Spindel einer NC-Fräsmaschine anbringbar ist, und dass der genannte Werkzeughalter aus zwei Elementen besteht, die mit einem Kardangelenk (16-17) miteinander verbunden sind, so dass sie ausgerichtet und angewinkelt werden können und eine Rotation der sphärischen Fräse (11) um eine Achse senkrecht zu ihrer äquatorialen Ebene und gleichzeitig eine Schwingung der Rotationsachse um ein Zentrum gestatten, das mit dem Zentrum der Fräse (11) selbst zusammenfällt.

4. Werkzeug gemäß Anspruch 3, wobei das Kardangelenk (16, 17) an einem Teil mit zwei teleskopartig verbundenen und gemeinsam rotierenden Elementen (13,14) an einem Körper (15 angebracht ist, der die sphärische Fräse (11) trägt, und an dem anderen Teil an einem Schaft (18), der an der Spindel der Fräsmaschine angebracht wird und mit ihr rotiert, wobei sich zwischen dem genannten Körper und dem genannten Schaft eine Federvorrichtung befindet, die die Achse der Fräse normalerweise mit der Achse des Werkzeughalters und der Spindel ausgerichtet hält und zurückbringt.

## Claims

1. A method of machining a groove or a seat with a spherical undercut surface, starting from a bore in a workpiece, a spherical milling cutter (11) with a cylindrical portion (11') in the equatorial plane being used, and said spherical milling cutter rotating about an axis of rotation which is perpendicular to its equatorial plane, and the axis of rotation at the same time oscillating about a centre of oscillation which coincides with the centre of the spherical milling cutter.

2. Method according to Claim 1, the oscillation of the milling cutter having the centre of the spherical milling cutter (11) as its centre, and the equatorial plane of the spherical milling cutter being located inside the entrance opening of the groove or of the seat to be executed.

3. A tool for machining a groove or a seat with a spherical undercut surface in a previously spot-drilled workpiece in accordance with a machining method according to Claim 1, **characterized in that** a spherical milling cutter (11) has a cylindrical portion (11') in an equatorial plane and is borne by a toolholder (13, 14, 15, 18) which can be attached to a spindle of an NC milling machine, and **in that** said toolholder consists of two elements which are interconnected by a universal joint (16-17), so that they can be aligned and angled and allow rotation of the spherical milling cutter (11) about an axis perpendicular to its equatorial plane and at the same time oscillation of the axis of rotation about a centre which coincides with the centre of the milling cutter (11) itself.

4. Tool according to Claim 3, the universal joint (16, 17) being attached, on one part, with two telescopically connected and co-rotating elements (13, 14), to a body (15) which bears the spherical milling cutter (11), and, on the other part, to a shaft (18) which is attached to the spindle of the milling machine and rotates therewith, a spring device being located between said body and said shaft, which device normally keeps the axis of the milling cutter aligned with the axis of the toolholder and of the spindle and returns it into said alignment.

## Revendications

1. Procédé pour la fabrication d'une rainure ou d'un siège avec chambrage sphérique, à partir d'un alésage dans une pièce d'oeuvre, dans lequel on utilise une fraise sphérique (11) avec une partie cylindrique (11') dans le plan équatorial, et dans lequel ladite fraise sphérique tourne autour d'un axe de rotation qui s'étend perpendiculairement à son plan équatorial, et dans lequel l'axe de rotation oscille en même temps autour d'un centre d'oscillation, qui coïncide avec le centre de la fraise sphérique.

2. Procédé selon la revendication 1, dans lequel l'oscillation de la fraise a pour centre le centre de la fraise sphérique (11) et dans lequel le plan équatorial de la fraise sphérique se trouve à l'intérieur de l'ouverture d'entrée de la rainure à réaliser ou du siège à réaliser.

3. Outil pour la fabrication d'une rainure ou d'un siège à chambrage sphérique dans une pièce d'oeuvre préalablement alésée, suivant un procédé de fabrication selon la revendication 1, **caractérisé en ce qu'**une fraise sphérique (11) présente une partie cylindrique (11') dans un plan équatorial, et est portée par un porte-outil (13,14,15,18) qui peut être monté sur une broche d'une fraiseuse à commande numérique, et **en ce que** ledit porte-outil est constitué de deux éléments qui sont reliés l'un à l'autre par un joint de cardan (16, 17), de sorte qu'ils peuvent être alignés et mis sous angle, et permettent une rotation de la fraise sphérique (11) autour d'un axe perpendiculaire à son plan équatorial et en même temps une oscillation de l'axe de rotation autour d'un centre qui coïncide avec le centre de la fraise (11) elle-même.

4. Outil selon la revendication 3, dans lequel le joint de cardan (16,17) est monté en une première partie, avec deux éléments (13,14) reliés de façon télescopique et tournant ensemble, sur un corps (15) qui porte la fraise sphérique (11), et en l'autre partie sur une tige (18) qui est montée sur la broche de la fraiseuse et tourne avec elle, tandis qu'il y a entre ledit corps et ladite tige, un dispositif à ressort qui maintient et rappelle l'axe de la fraise normalement aligné avec l'axe du porte-outil et de la broche.
